# EUROPEAN PATENT APPLICATION

(11) **EP 1 748 514 A1**
(43) Date of publication of application: **31.01.2007**
(21) Application number: 05745985.1
(22) Date of filing: 02.06.2005
(51) Int. Cl.: H01Q 1/24, H01Q 9/18, H01Q 9/20, H04M 1/02

(54) **MOBILE RADIO TERMINAL**

(30) Priority: 11.06.2004 JP 2004174304
(71) Applicant: MATSUSHITA ELECTRIC INDUSTRIAL CO., LTD., Osaka 571-8501 (JP)
(72) Inventor: KOYANAGI, Yoshio Matsushita Electric Ind. Co.,Ltd., Chuo-ku, Osaka-shi Osaka 540-6319 (JP); SAITO, Yukata Matsushita Electric Ind. Co.,Ltd., Chuo-ku, Osaka-shi Osaka 540-6319 (JP); IWAI, Hiroshi Matsushita Electric Ind. Co.,Ltd., Chuo-ku, Osaka-shi Osaka 540-6319 (JP)
(74) Representative: Grünecker, Kinkeldey, Stockmair & Schwanhäusser Anwaltssozietät
(86) International application number: PCT/JP2005/010133
(87) International publication number: WO 2005/122325

(57) **Abstract**

By devising the case shape and antenna placement, it is possible to provide a mobile radio terminal capable of always having a high antenna sensitivity even when the mobile radio terminal is placed in a pocket of user's clothes. In this mobile radio terminal (1), the case (2) has a plane A having a flat shape and a plane B having a protruding portion (2a) at a part of the center portion or the entire portion. An antenna element (3) is placed on the protruding portion (2a) of the plane B in parallel to the plane A. Since the plane B has a protrusion or a curved shape, when the user puts the terminal into the pocket of his/her clothes, he/she unconsciously puts the terminal with the plane A in contact with his/her body side. Accordingly, the mobile radio terminal (1) is always contained in the clothes pocket with the antenna element (3) positioned at a distance from the user's body, i.e., at the farthest position from the user's body. Consequently, the electromagnetic wave of the antenna element (3) is not affected by the user's body and the mobile radio terminal (1) can always assure a preferable antenna gain and a high antenna sensitivity.

## Description

### Technical Field

The present invention relates to a mobile wireless terminal such as a handy mobile telephone and a mobile wireless apparatus, and, more particularly to a pocketable mobile wireless terminal with an improved housing shape and antenna.

### Background Art

Conventionally, a small mobile wireless terminal such as a mobile telephone and a mobile wireless apparatus is likely to be placed in the user's pocket and used. In this state of use, the antenna attached to the mobile wireless terminal comes close to the human body, and so deterioration of antenna gain may be caused by mismatching of an antenna circuit resulting from change in input impedance of the antenna or by absorption of part of electromagnetic waves radiated from the antenna into the humanbody. For example, when communication is performed on the mobile telephone, radiowave frequencies of 800 MHz or more are used, where the signal wavelength is approximately 37 cm or less. However, with a small mobile telephone that can be placed in a pocket, the thickness of the housing is limited to 30 mm or less, and the antenna is arranged in a position very close to the mobile telephone, compared to the wavelength. Thus, antenna gain may be deteriorated significantly by absorption of electromagnetic waves into the human body or impedance mismatching of the antenna.

Thus, conventional mobile telephones are designed to improve antenna gain in a conversation state by positioning the antenna as far as possible from the receiver plane that comes close to the human body. In addition, in the antenna device disclosed in patent document 1 below, deterioration of antenna gain due to impedance mismatching is prevented by conjugate-matching internal impedance of a radio circuit and input impedance of a matching circuit in accordance with change in antenna impedance depending on the state of use on the human body. Moreover, patent document 2 below discloses an antenna device, where a clip for fixing a mobile telephone in a chest pocket is used as part of the antenna, thereby increasing the distance between the antenna and the human body with the mobile telephone interposed in between, and reducing the deterioration of antenna gain due to the influence of the human body, by the shield effect of electromagnetic waves from the mobile telephone. Also, the antenna device disclosed in patent document 3 below reduces current components flowing in the ground plate and thus minimizes the influence by holding hand, thereby improving antenna characteristics by allowing two helical antennas to be closer to the ground plate with a sufficiently small gap, compared to a wavelength, and placing in parallel with the ground plate.
Patent Document 1: Japanese Patent Application Laid-Open No.2001-267953
Patent Document 2: Japanese Patent Application Laid-Open No.HEI11-27355
Patent Document 3: Japanese Patent Application Laid-Open No.2001-156517

### Disclosure of Invention

### Problems to be Solved by the Invention

However, when the above conventional mobile telephone is placed in a pocket, the antenna may not be necessarily placed away from the human body. Accordingly, if the mobile telephone is placed in a pocket and the antenna side is closer to the human body, antenna sensitivity may significantly be deteriorated due to impedance mismatching and absorption of electromagnetic waves by the human body. In addition, with the technology described in the above patent document 1, when the distance between the human body and the antenna changes needs to be changed depending on the state the mobile telephone is placed in a pocket, matching conditions have to be changed according to impedance change, and so a matching circuit and control circuit for that purpose are necessary and a problem of high product costs arises. Moreover, according to the technology in patent document 2, the antenna is always placed away from the human body when the mobile telephone is placed in a chest pocket so as to have a clip in the chest pocket, but, if the mobile telephone is placed in a pocket without using a clip, the antenna is not necessarily placed away from the human body. Furthermore, with a thin, card-type mobile wireless terminal and the like, it is difficult to make a clip structure thinner and keep the mechanical strength. Further, according to the technology described in patent document 3, although antenna characteristics are improved when the mobile telephone is held in the human hand and used, deterioration of antenna characteristics when the mobile telephone is placed in a pocket still does not improve due to the influence of the human body.

The present invention has been made in consideration of the above situations, and it is therefore an object of the present invention to provide a mobile wireless terminal that is able to always ensure an excellent antenna gain and high antenna sensitivity when a small mobile wireless terminal such as amobile telephone and a mobile wireless apparatus is placed in a pocket and used by providing a housing shape and antenna placement so that the user naturally keeps and uses the antenna away from the human body.

### Means for Solving the Problem

To achieve the above object, the mobile wireless terminal according to the present invention adopts a configuration of a pocketable mobile wireless terminal having: a housing having a first plane having a flat outer plane and a second plane having an outer plane on which a protruding section is formed at least near the center; and an antenna element placed at the protruding section on the second plane farthest away from the first plane, in parallel with the first plane.

### Advantageous Effect of the Invention

According to the present invention, when a mobile wireless terminal is placed in a pocket, an antenna element is naturally placed farthest from the human body, so that the distance between the human body and the antenna is kept constant and high antenna gain can be constantly achieved. Moreover, the antenna element can be completely housed in the housing, so that a thin, small, and mechanically strong mobile wireless terminal can be realized. Also, no radio-frequency current flows on the radio substrate composed of a conductive substrate, and the antenna element alone radiates electromagnetic waves, so that the antenna element that is the radiation source can be placed away from the human body. Furthermore, by providing a radio substrate between the human body and the antenna, a high shield effect can be achieved in the direction of the human body, so that a high antenna gain can be constantly achieved. Also, polarized waves of an antenna element can be operated without being affected by the radio substrate, so that the directivity of polarized waves in accordance with the polarized waves of incoming waves can be realized.

Furthermore, by making the length of the radio substrate half the wavelength or more, the radio substrate operates as a reflector and the directivity can be formed in the opposite direction to the human body, so that a high antenna gain can be constantly achieved when the mobile wireless terminal is placed on the human body. Moreover, the radio substrate and the antenna element as a whole function as a radiation source, so that it is possible to form an antenna that operates at a relatively low frequency in a pocketable housing size. Further, the antenna element that is a main radiation source is placed in a position away from the human body, so that a high antenna gain can be constantly achieved even at a relatively low frequency.

### Brief Description of Drawings

FIG.1 is a basic configuration diagram of a pocketable mobile wireless terminal according to Embodiment 1 of the present invention;
FIG.2 is a conceptual diagram showing a state in which a user places and uses the pocketable mobile wireless terminal in FIG.1 in a pocket;
FIG.3 is a characteristic diagram showing antenna radiation characteristics of the pocketable mobile wireless terminal of Embodiment 1 shown in FIG. 1;
FIG.4 is a diagram showing variations of a housing shape of the pocketable mobile wireless terminal of Embodiment 1 of the present invention;
FIG.5 is a diagram showing other configuration examples of an antenna element of the pocketable mobile wireless terminal of Embodiment 1 of the present invention;
FIG.6 is a configuration diagram of array antennas of the pocketable mobile wireless terminal of Embodiment 1 of the present invention;
FIG.7 is a basic configuration diagram of a pocketable mobile wireless terminal according to Embodiment 2 of the present invention; and
FIG.8 is a basic configuration diagram of a pocketable mobile wireless terminal according to Embodiment 3 of the present invention.

### Best Mode for Carrying Out the Invention

Embodiments of the pocketable mobile wireless terminal of the present invention will be described in detail below with reference to the drawings. Components that are the same in drawings used in each embodiment are attached the same codes and a duplicate description will be omitted.

First, an outline of the mobile wireless terminal of the present invention will be described for ease of understanding. The housing of a pocketable mobile wireless terminal according to the present invention is formed with a first plane (plane A) of a flat shape and a second plane (plane B), on which a protrusion is formed in part or in entirety near the center. Further, an antenna element is placed in the protruding section on plane B, in parallel with plane A. Since plane B of the housing has a protrusion or a curved shape, when the mobile wireless terminal is carried in a pocket and used by the user, the mobile wireless terminal is naturally placed in the pocket with flat plane A in contact with the human body side. Thus, the mobile wireless terminal is always placed in a pocket keeping a distance from the human body at the position where the antenna element is farthest from the human body. By this means, the influence of the human body on electromagnetic waves of the antenna element is less, so that the mobile wireless terminal can always keep excellent antenna gain and high antenna sensitivity.

### (Embodiment 1)

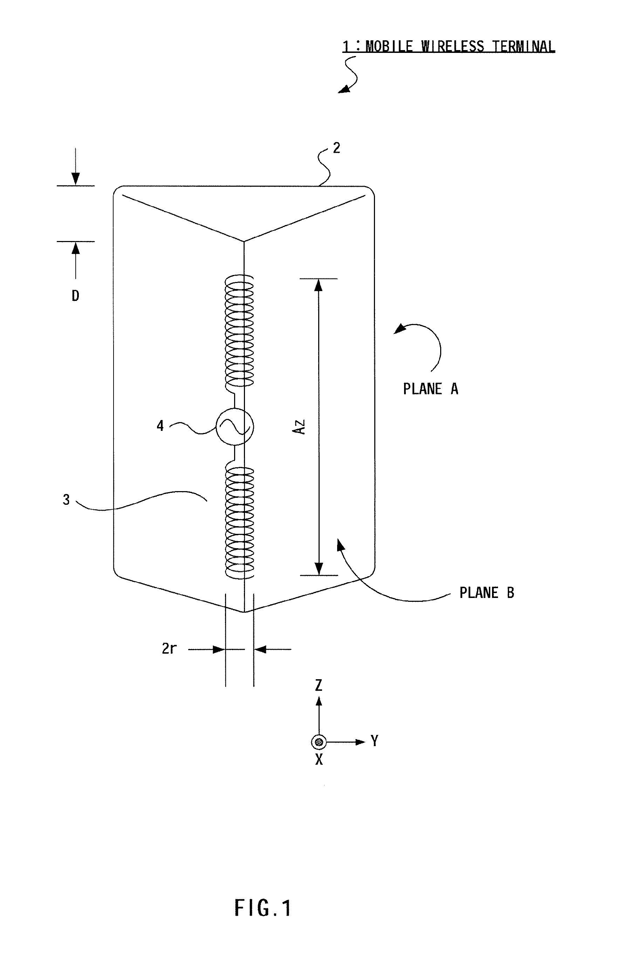

FIG. 1 shows a basic configuration diagram of a pocketable mobile wireless terminal according to Embodiment 1 of the present invention. As shown in FIG. 1, mobile wireless terminal 1 of the present embodiment is provided with housing 2 formed with flat plane A (first plane), and plane B (second plane) having a protruding shape near the center along the longitudinal direction of housing 2, and housing 2 as a whole has a shape of a triangular prism. The operation plane and display plane are provided on plane A of housing 2, and antenna element 3 provided with feeding section 4 in the center portion is placed in protruding section 2a on plane B of housing 2, in parallel with the longitudinal direction of plane A. When mobile wireless terminal 1 having the shape shown in FIG. 1 is placed in a pocket and used by the user, given the ease of the placing and usability, it is anticipated that the mobile wireless terminal 1 is carried such that flat plane A is maintained close to the human body side.

The coordinate system is shown below mobile wireless terminal 1 in FIG.1. That is, according to the coordinate system shown, when the index finger, the middle finger and the thumb of the right hand are at right angles with respect to each other, the middle finger points toward the X axis direction (direction from the back side to the front side of paper on which the figure is shown), the thumb points toward the Y axis direction (direction from left to right in the figure), and the index finger points toward the Z axis direction (direction from bottom to top in the figure).

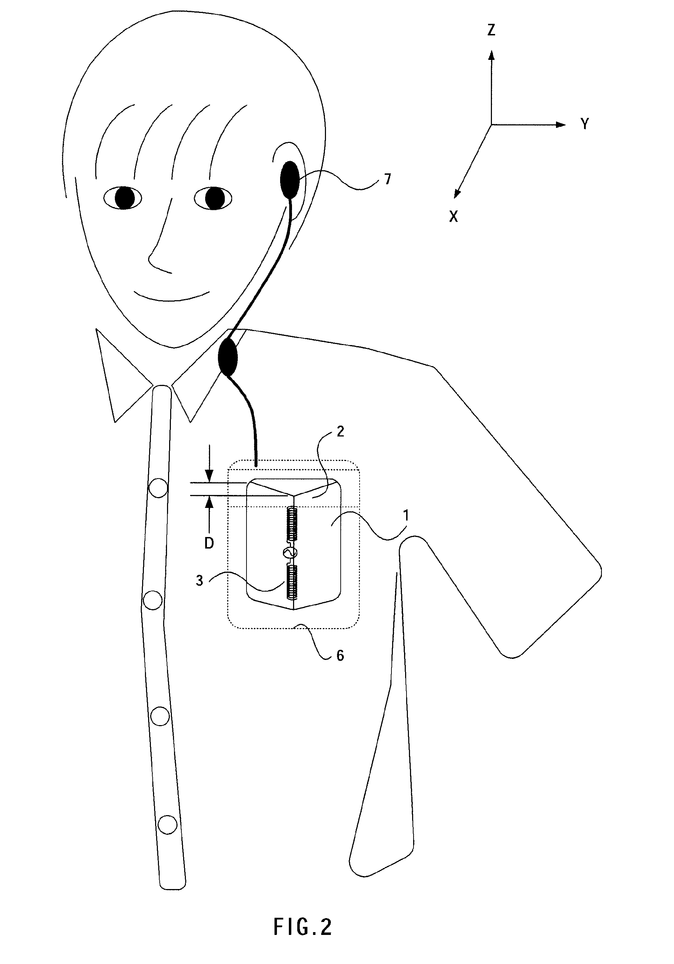

FIG.2 is a conceptual diagram showing a state in which the user carries the pocketable mobile wireless terminal in FIG. 1 in a pocket and uses it. The example of FIG.2 assumes a situation where mobile wireless terminal 1 is placed in chest pocket 6 of a shirt and conversation is carried out using earphone microphone set 7. Since, in this case, mobile wireless terminal 1 is a size slightly smaller than chest pocket 6 and plane B protrudes near the center, the manner of use in which the user places mobile wireless terminal 1 with plane A facing human body 5 is general. Therefore, the coordinate system shown in FIG.2 is the same as the coordinate system of FIG.1.

In FIG's.1 and 2, distance D between antenna element 3 and plane A, which is the closer side to human body 5, depends on the triangular prism shape of housing 2, and, as the thickness of entire housing 2, including protruding section 2a on plane B, is thicker, larger distance D can be secured between antenna element 3 and human body 5.

The operations of antenna element 3 will be described in detail below using FIG's.1 to 5. In FIG. 1, antenna element 3 operates as a helical dipole antenna for built-in use in a mobile telephone. Here, the description below will be made assuming that mobile wireless terminal 1 is a mobile telephone, and the frequency of radio waves of the mobile telephone is 1.5 GHz (the wavelength is 200 mm). If the size of housing 2 of mobile wireless terminal 1 that can be placed in pocket 6 is set to be, for example, width 50 mm x length 80mmx thickness 21 mm, this corresponds to 0.25 wavelength x 0.40 wavelength x 0.105 wavelength. The axial length Az of antenna element 3 that can be housed in housing 2 is at most 60 mm or less, which is, 0.30 wavelength. However, the electrical length is preferably 0.50 wavelength to make antenna element 3 to resonate at the operating frequency, and so an element in a helical or meander shape for shortening the wavelength is generally incorporated in antenna element 3. FIG. 1 shows an example using a helical dipole antenna element of the axial length Az = 35 mm (0.175 wavelength), helical radius 2r = 1 mm, and 100 turns.

Here, antenna element 3 is attached in close contact with protruding section 2a on plane B along the longitudinal direction (Z axis direction). By attaching antenna element 3 in close contact with protruding section 2a on plane B in this manner, the distance D between plane A and an axis center of antenna element 3 can be maximized. In the case of FIG.1, approximately, D = 20 mm.

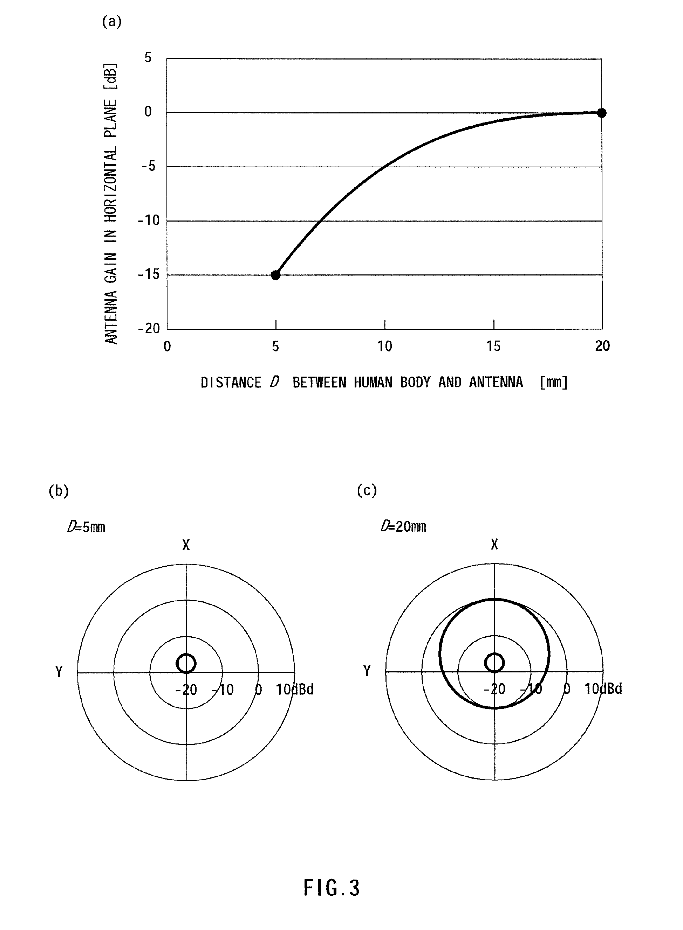

FIG.3 is a characteristic diagram showing antenna radiation characteristics of the pocketable mobile wireless terminal of Embodiment 1 shown in FIG.1. That is, these diagrams show antenna radiation characteristics when antenna element 3, which is a helical dipole antenna having the axial length Az = 35 mm and helical radius 2r = 1 mm, is placed close to human body 5. Antenna element 3 is subjected to matching in free space. The horizontal axis in FIG.3A is the distance D (mm) between human body 5 and antenna element 3, and the vertical axis is the antenna gain (dB) of vertically polarized waves in a horizontal plane (in the XY plane of the coordinate). This radiation characteristic diagram shows an antenna gain when D = 20 mm is 0 dB. FIG. 3B shows the directivity pattern in a horizontal plane (in the XY plane) when the distance D = 5 mm, and FIG. 3C shows the directivity pattern in the horizontal plane (in the XY plane) when the distance D = 20 mm.

FIG.3 clearly shows that, by increasing the distance D between human body 5 and antenna element 3, the directivity pattern becomes larger in the horizontal plane (in the XY plane), and the antenna gain improves significantly. In FIG.3A, by increasing the distance D from 5 mm to 20 mm, antenna gain improves approximately 15 dB in the horizontal directions, and the antenna gain is almost saturated at distance D = 20 mm.

D = 5 mm assumes a case in which antenna element 3 is placed on the plane A side or mobile wireless terminal 1 is placed in a pocket slightly afloat, with plane B facing the human body 5 side, and shows in this case that antenna performance is substantially deteriorated by human body 5. This is a phenomenon caused by both factors that impedance mismatching tends to occur because antenna element 3 is small compared to the wavelength and thus a frequency band is narrow, and that the amount of absorption of electromagnetic waves from antenna element 3 into human body 5 increases as antenna element 3 comes closer to human body 5.

In a case of mobile wireless terminal 1 of Embodiment 1 shown in FIG.1, the thickness of housing 1 is 21 mm, but even if the thickness is 16 mm as a thinner housing size, D = 15 mm can still be ensured. Therefore, an improvement of even about 14 dB in antenna performance is achieved between placing antenna element 3 on the plane Aside (D = 5 mm) and placing antenna element 3 in protruding section 2a on plane B (D = 15 mm).

That is, if antenna element 3 is used close to human body 5, since the distance D between human body 5 and antenna element 3 substantially affects antenna performance, it is necessary to ensure that the distance D is as large as possible depending on the state of use of mobile wireless terminal 1. Moreover, to minimize change in antenna input impedance of antenna element 3 due to proximity to human body 5, it is necessary to place antenna element 3 so that change in the distance between human body 5 and antenna element 3 is minimized.

Here, from the sense of stability of placing the mobile wireless terminal 1 in chest pocket 6, the user naturally places mobile wireless terminal 1 in chest pocket 6 in a direction in which antenna element 3 is away from the chest. By using mobile wireless terminal 1 with plane A of housing 2 facing the human body 5 side in this manner, it is more comfortable and convenient for use than when plane B that is an antenna placement plane faces the human body 5 side. In addition, the directivity of antenna element 3 also naturally improves depending on such a direction of placing mobile wireless terminal 1 in pocket 6.

That is, in the example of Embodiment 1 shown in FIG. 1, protruding section 2a is an antenna storage section and is provided in the center of plane B of housing 2. Therefore, if plane B is placed in a pocket so as to face the human body 5 side, it is not only uncomfortable because protruding section 2a touches the chest, but also inconvenient because mobile wireless terminal 1 is not stably placed in pocket 6. Thus, in order to allow protruding section 2a to be recognized by the user when placed 1 in a pocket, a sufficient volume of protrusion is necessary. If the volume of protrusion is defined as "maximum thickness - minimum thickness of housing 2," the volume of protrusion of mobile wireless terminal 1 of Embodiment 1 shown in FIG.1, corresponds to 21 mm and is a sufficient size. Generally, if the volume of protrusion of 5 mm or more, as a necessary and sufficient size to be recognized by the user, the effect of preventing the user from placing the mobile wireless terminal 1 in the pocket with protruding section 2a facing the human body, can be expected.

Although, with Embodiment 1 shown in FIG. 1, a protrusion is formed over all plane B toward the center because the housing of mobile wireless terminal 1 has a shape of triangular prism, the housing shape is by no means limited to that shown in FIG.1, and other shapes may be possible if protruding section 2a exists near the center of plane B, and plane A that is the closer side to human body 5, is flat.

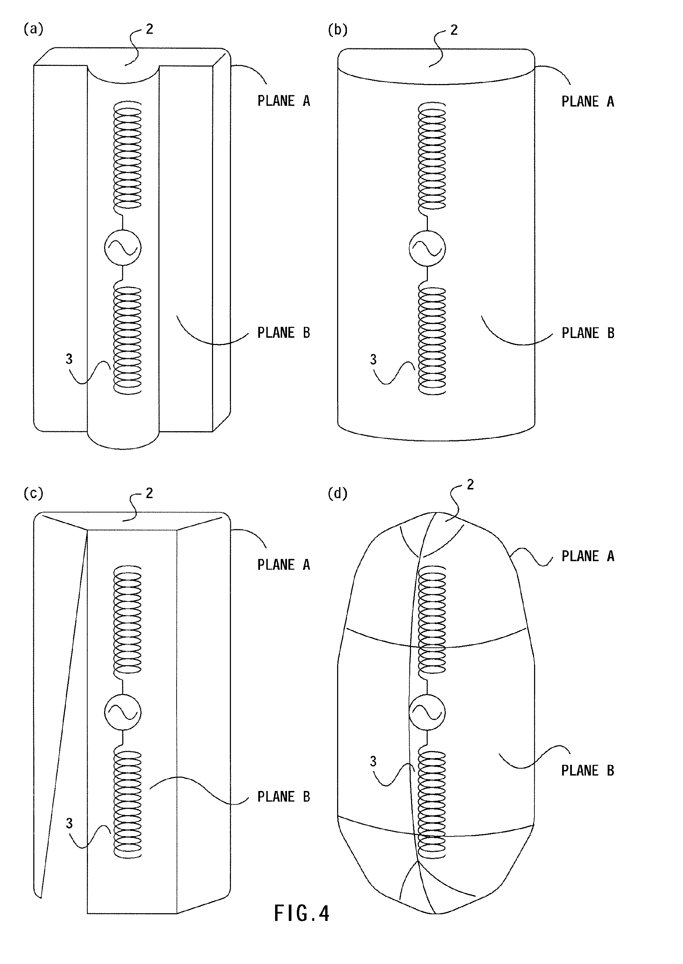

FIG.4 is a diagram showing variations of the housing shape of the pocketable mobile wireless terminal of Embodiment 1 of the present invention and shows some examples of housing shapes that can form a protruding section near the center of plane B of housing 2. In FIG. 4A, for example, the protruding section on plane B is formed in a curved shape by adopting a semi-cylindrical shape like a cylinder divided into two parts for a shape of plane B. With such a configuration, if placed in a pocket with the plane B side on which a protruding section exists facing the human body 5 side, the protruding section moves and is unstable in the pocket, and this causes a bad sense of use and inconvenience. Naturally, the user uses the mobile wireless terminal with plane A of housing 2 facing the human body 5 side. Thus, the user uses antenna element 3 away from human body 5 without being aware of the position of antenna element 3, and, as a result, high antenna gain is achieved.

In addition, in FIG.4B, a protruding section is formed by making plane B of housing 2 a semicircular plane. By adopting such a shape of the protruding section, antenna element 3 has an operation effect similar to that in FIG. 4A. Here, the entire plane B does not have to be a semicircle as in FIG.4B, and, instead, part of plane B may be formed as a semicircle. When forming such a semicircular protruding section partially, a sufficient volume of protrusion that the user can recognize is necessary, and, for example, the volume of protrusion of the semicircular protruding section is preferably of approximately 5 mm or more.

In FIG.4C, plane B of housing 2 has a smaller area than plane A, and a trapezoidal protruding section is formed on the plane B side. By adopting such a shape of the protruding section, antenna element 3 has an operation effect similar to that in FIG.4A. If the protruding section on plane B is flat like in FIG. 4C, the ratio between the area of the protruding section on plane B and the area of plane A has to be set appropriately, so that, when placed in a pocket with plane B facing the human body 5 side, mobile wireless terminal 1 becomes unstable. Also, the ratio between the thickness of housing 2 and the width of plane A has to be set appropriately. In the example in FIG.4C, compared to the width of plane A of 50 mm, the width of the protruding section on plane B is 25 mm and the thickness of the protruding section is 10 mm, and an area ratio between plane A and the protruding section on plane B is 2:1, and a ratio between the width and the thickness of housing 1 is 5:1.

FIG.4D shows a configuration where the flat shape of plane A of housing 2 is made an elliptical shape long in the longitudinal direction and plane B rises as a whole with a peak at the center portion. By adopting such a curved shape for the protruding section on plane B, an operation effect similar to that in FIG.4A is achieved. In a case where plane B is curved also in the vertical directions (Z axis direction) like in FIG.4D, whenamobile telephone is placed in pocket 6 with plane B facing human body 5, instability is caused not only in the horizontal directions (Y axis direction) but also in the vertical directions (Z axis direction) . Thus, an operation effect similar to that in FIG.4A can be expected even if the volume of protrusion on the plane B side is less than in FIG.4A.

Next, configuration examples of antenna element 3 of mobile wireless terminal 1 of Embodiment 1 of the present invention and effects of antenna element 3 in each case will be described using FIG's.1 and 5. In Embodiment 1 shown in FIG.1, a helical dipole antenna is used as antenna element 3 and is an electric field detecting balanced antenna having feeding section 4 provided in the center of antenna element 3 as a feeding point. Also, the helical radius is as small as 2r = 1 mm with respect to the axis length Az = 35 mm, and the main polarized wave component of radiation is the axial direction component (Z direction component), and antenna element 3 operates as a normal mode helical dipole antenna. Moreover, the total length of antenna element 3 is about 0.50 wavelength and is adjusted to be matched with the operating frequency when antenna element 3 is placed near human body 5 at a certain distance. When this antenna element 3 is placed along the Z axis, electromagnetic waves radiated from antenna element 3 are mainly vertically polarized wave components and match with the vertically polarized wave components of the main polarized waves of the base station antenna of the mobile telephone, so that performance with higher antenna sensitivity can be achieved.

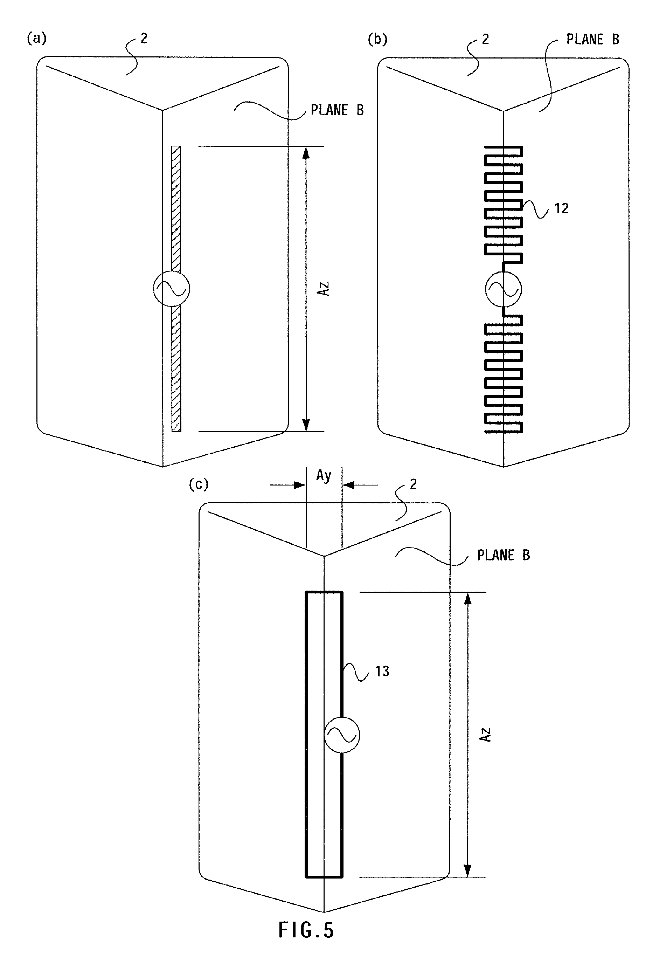

FIG.5 is a diagram showing other configuration examples of an antenna element of the pocketable mobile wireless terminal of Embodiment 1 of the present invention. FIG.5A shows a case where antenna element 3 does not use an element for shortening the wavelength, but where, instead, a dipole antenna is formed with monopole element 11, the electrical length and the physical length of which virtually match. FIG.5B is a case in which a dipole antenna is configured as antenna element 3 using meander element 12 that is a wavelength shortening element. These are both electric field detecting balanced antennas, and, if they are in resonance with the operating frequency, an operation effect similar to that of Embodiment 1 in FIG.1 is achieved. Further, since linear and meander elements can be placed in close contact with the protruding section on plane B of housing 2, the distance D between human body 5 and antenna element 3 can be increased. Moreover, if plane B of housing 2 is made of non-metal such as resin, by embedding these antenna elements 3 in plane B and performing casting, it is possible to further ensure the distance D and realize a solid housing structure.

FIG.5C is a case in which loop antenna 13 is used as antenna 3 and is a magnetic field detecting balanced antenna having the center of the antenna as a feeding point. In this case, polarized wave components in the lateral direction of the antenna radiation increase as the width Ay becomes larger with respect to the length Az of the loop. Thus, even if this loop antenna 13 is placed in the longitudinal direction along the Z axis of loop antenna 13, loop antenna 13 radiates the horizontally polarized wave components mainly, and, therefore, when used in a radio communication system in which horizontally polarized wave components are radiated from a base station antenna, performance with higher antenna sensitivity can be achieved.

Thus, according to mobile wireless terminal 1 of Embodiment 1 of the present invention, the user can always place antenna element 3 in a position away from human body 5 at a certain distance without being aware of an placement position of antenna element 3, so that performance with high antenna sensitivity can be constantly achieved. Further, if housing 2 is made of resin, antenna element 3 can completely be housed in housing 2, and, therefore, a thin small mobile wireless terminal with high mechanical strength can be realized.

Although the examples in FIG.5 show housing 2 having a triangular prism shape, it goes without saying that the configurations of the antennas in FIG.5 can be combined with any housing shape in FIG. 4 and still achieves the same operation effect. Further, the shape of housing 2 is by no means limited to a configuration like Embodiment 1 shown in FIG.1, where protruding section 2a is provided along the Z axis near the center of plane B, and may have, for example, a protruding section on the Y axis or at a tilt near the center of plane B. The protruding section may adopt any shape if it is a configuration by which the user can recognize the protrusion when placing the mobile wireless terminal in a pocket.

A part where antenna element 3 is attached is not always placed to the entire area in the Z axis direction of housing 2 as shown of Embodiment 1 of FIG. 1, and, for example, may be placed at a top end or bottom end of housing 2. The placement position of antenna element 3 is by no means limited if antenna element 3 is placed away from human body 5 of the user. Moreover, the electrical length of antenna element 3 is by no means limited to the 0.5 wavelength like Embodiment 1 shown in FIG. 1, and may also have other electrical length such as 1 wavelength.

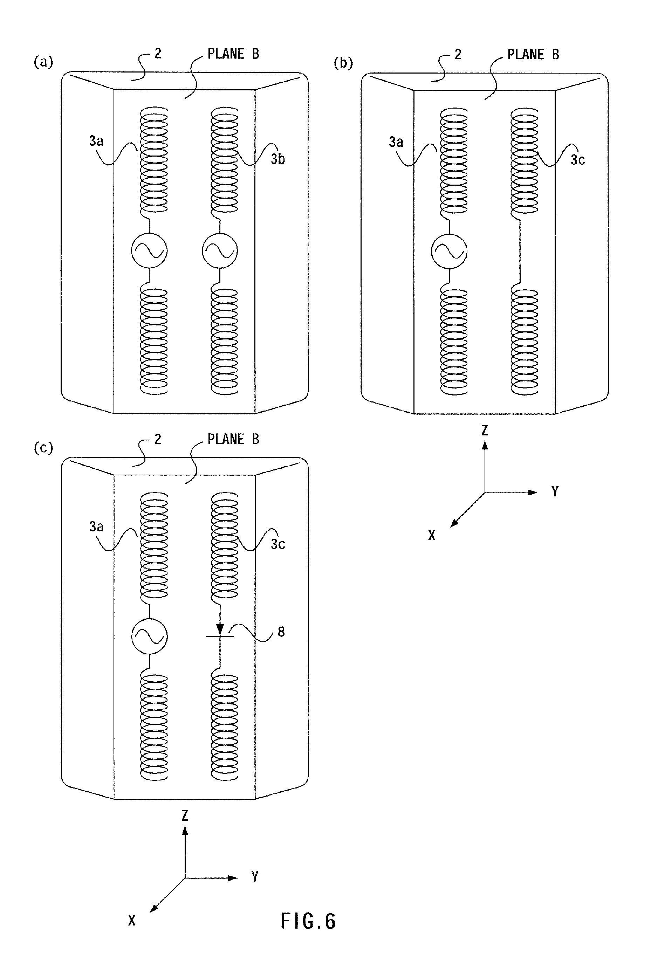

FIG. 6 is a configuration diagram of array antennas for the pocketable mobile wireless terminal of Embodiment 1 of the present invention. As shown in FIG. 6, the number of antenna elements may be two or more if placed in the protruding section on plane B. That is, as shown in FIG. 6A, two or more antenna elements 3a and 3b may be arrayed in the longitudinal direction, or may also be arrayed in the lateral direction (not shown). In such cases, directivity control and antenna diversity can be implemented in the horizontal plane (XY plane) by feeding power to the arrayed antenna elements 3a and 3b at different phases or amplitudes simultaneously or by switching between the arrayed antenna elements 3a and 3b. Alternatively, an antenna that covers a plurality of frequency bands can be configured by allowing the arrayed antenna elements 3a and 3b to operate at different frequencies.

One of the plurality of antenna elements 3a and 3b shown in FIG. 6A may adopt configurations that enables antenna directivity control, polarized wave control, and diversity by making earphone microphone set 7 shown in FIG.2 an antenna element and by feeding power to antenna elements 3a and 3b at different phases or amplitudes simultaneously or by switching antenna elements 3a and 3b.

Further, as shown in FIG.6B, a configuration may also be adopted in which power feeding antenna element 3a and parasitic antenna element 3c are placed together on plane B of housing 2, and at least parasitic antenna element 3c is placed closer to human body 5. In this case, antenna directivity can be controlled by selecting a desired value for the electrical length of parasitic antenna element 3c. In the case of FIG.6B, if the electrical length of parasitic antenna element 3c is longer than half the wavelength of the operating frequency, parasitic antenna element 3c operates as a reflector, so that radiation directivity becomes stronger in the -Y direction in the figure. If the electrical length of parasitic antenna element 3c is shorter than half the wavelength, the parasitic antenna element 3c operates as a wave director, so that radiation directivity becomes stronger in the +Y direction in the figure.

Also, as shown in FIG.6C, a configuration may be adopted in which diode 8 is provided in the center of parasitic antenna element 3c placed together with power feeding antenna element 3a. In this case, antenna directivity can actively be controlled because it is possible to change the electrical length of parasitic antenna element 3c depending on whether diode 8 is conductive or non-conductive. Moreover, in the antenna configuration like in FIG.6C, if diode 8 is conductive, parasitic antenna element 3c operates as a reflector or a wave director, and, therefore, radiation directivity becomes stronger in the -Y direction or +Y direction in the figure. If diode 8 is non-conductive, parasitic antenna element 3c does not operate, and, therefore, no antenna directivity is formed in the Y direction. In the configurations of FIG's. 6B and 6C, it is possible to extend the operating frequency band of the antenna or allow the antenna to operate in a plurality of frequencies by selecting a desired value for the electrical length of parasitic antenna element 3c.

### (Embodiment 2)

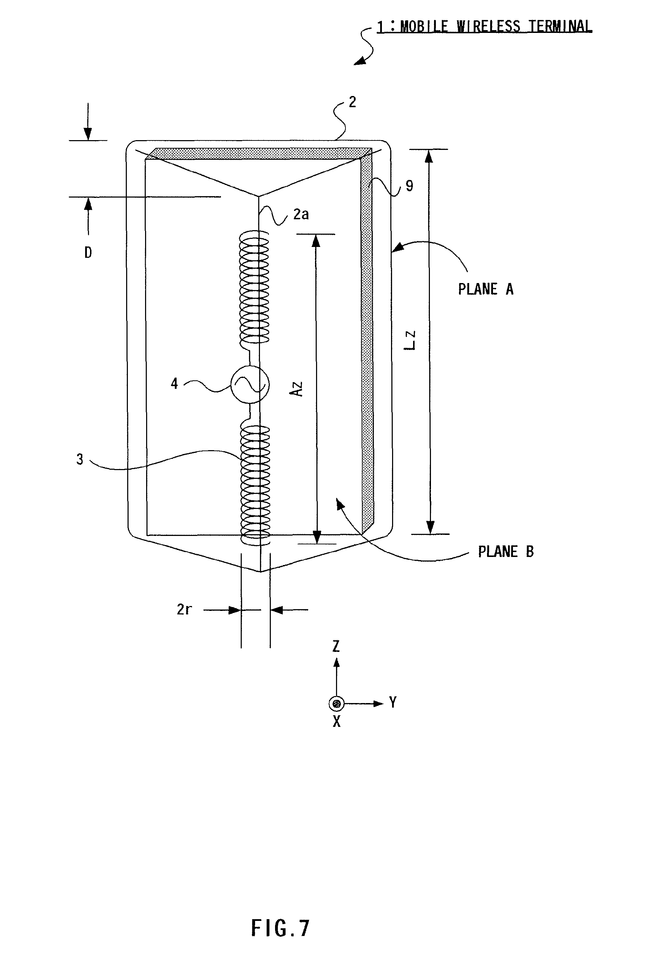

FIG.7 shows a basic configuration diagram of a pocketable mobile wireless terminal according to Embodiment 2 of the present invention. Pocketable mobile wireless terminal 1 of Embodiment 2 shown in FIG.7 has built-in radio substrate 9 of half the wavelength of the operating frequency in housing 2 or more. Radio substrate 9 is placed in a position close to plane A of housing 2 in parallel with plane A to take as large an area as possible in housing 2. In the example of FIG.7, if the size of housing 2 is set as, for example, width 50 mm x length 80 mm x thickness 21 mm, and the operating frequency 2.5 GHz (wavelength 120 mm), this corresponds to 0.42 wavelength x 0.66 wavelength x 0.175 wavelength. Since the size of radio substrate 9 has to be housed in housing 2, if, for example, width 45 mm x length 75 mm x thickness 1 mm, this corresponds to 0.375 wavelength x 0.625 wavelength x 0.008 wavelength. As a result, the vertical length of radio substrate 9 becomes half the wavelength of the operating frequency or more.

Antenna element 3 has the axis length Az = 35 mm (0.29 wavelength) and the helical radius 2r = 1 mm. Antenna element 3 is attached in close contact with protruding section 2a on plane B along the longitudinal direction (Z axis direction) of housing 2. By attaching antenna element 3 in close contact with protruding section 2a on plane B, the distance D between plane A and the axis center of antenna element 3 can be maximized, and, also, the longitudinal direction of radio substrate 9 and the axial direction of antenna element 3 can match. Also, since the length of radio substrate 9 is half the wavelength of the operating frequency or more, radio substrate 9 operates as a reflector, so that directivity can be formed in the opposite direction to human body 5 (+X direction) due to the array effect with antenna element 3.

Also, since the positional relationship between radio substrate 9 and antenna element 3 incorporated in housing 2 is always constant, antenna directivity can be constantly formed in the opposite direction to human body 5. In FIG.7, by placing radio substrate 9 in parallel with plane A, it is possible to provide radio substrate 9 between antenna element 3 and human body 5 and a high-level shield effect in the direction toward human body 5. Further, although the distance between plane A of housing 2 and the user is very close when mobile wireless terminal 1 is placed in pocket 6, the distance is not fixed, and the distance between antenna element 3 and human body 5 may also vary. However, by adopting a configuration shown in FIG.7, influence of radio waves from human body 5 can be reduced due to a shield effect of radio substrate 9, so that constant impedance characteristics can be ensured, and, as a result, a high antenna gain can be constantly achieved.

Moreover, since antenna element 3 uses a dipole-shaped or loop-shaped antenna element and operates as a balanced-type antenna, compared to a case in which a non-balanced type antenna is used, a high-frequency current hardly flows on radio substrate 9, and even if a high-frequency current flows, an amplitude is smaller than on antenna element 3 side. Thus, influence of human body 5 is reduced by radio substrate 9, and polarized waves can be operated by the shape of antenna element 3 alone. By this means, it is possible to realize directivity of polarized waves in accordance with polarized waves of incoming waves and constantly achieve a high antenna gain. A method of configuring a shape of housing 2 of mobile wireless terminal 1 shown in FIG.7 and the effect of regulating a direction of placing mobile wireless terminal 1 in a pocket of the user by protruding section 2a are the same as those of Embodiment 1.

### (Embodiment 3)

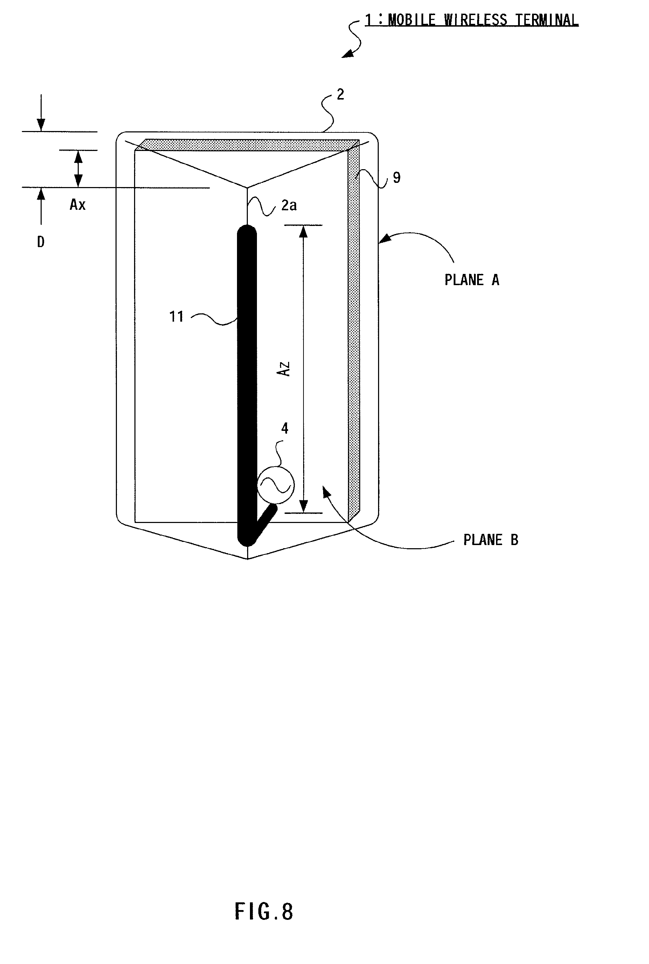

FIG. 8 shows a basic configuration diagram of a pocketable mobile wireless terminal according to Embodiment 3 of the present invention. Pocketable mobile wireless terminal 1 of Embodiment 3 shown in FIG.8 is configured such that an antenna element formed with linear monopole element 11 is placed in parallel with radio substrate 9 in housing 2 and operates as an inverted-L antenna or an inverted-F antenna. Radio substrate 9 is placed in a position close to plane A of housing 2, in parallel with plane A, to take as large an area as possible in housing 2. In addition, feeding section 4 for feeding power to the antenna element (monopole element 11) is positioned near the bottom end of the center on radio substrate 9. Monopole element 11 is formed to extend in the direction of protruding section 2a on plane B from feeding section 4 as a starting point, and bend in an L shape along protruding section 2a on plane B. A ground of feeding section 4 is grounded to a ground pattern on radio substrate 9. With such a structure, in FIG.8, an inverted-L antenna can be formed.

In mobile wireless terminal 1 of FIG.8, if the size of housing 2 is set as, for example, width 50 mm x length 80 mm x thickness 21 mm and the operating frequency 1 GHz (wavelength is 300 mm), this corresponds to 0.167 wavelength x 0.267 wavelength x 0.067 wavelength. Since the size of radio substrate 9 has to be housed in housing 2, if, for example, width 45 mm x length 75 mm x thickness 1 mm, this corresponds to 0.15 wavelength x 0.25 wavelength x 0.003 wavelength. Since the antenna element (monopole element 11) preferably has the electrical length of 0.25 wavelength to cause the inverted-L antenna to resonate at the operating frequency, here the length of the antenna element (monopole element 11) is set as Az = 75 mm (0.25 wavelength). Also, the distance between the antenna element (monopole element 11) and radio substrate 9 is set as Ax = 20 mm (0.066 wavelength). With such a configuration, the antenna element (monopole element 11) in FIG.8 operates as an inverted-L antenna, so that a built-in antenna operating at relatively low frequencies can be formed even though the size of housing 2 is small compared to the wavelength.

Although a certain amount of radiation occurs also from radio substrate 9 in the configuration of mobile wireless terminal 1 shown in FIG.8, a high antenna gain is constantly achieved because the antenna element (monopole element 11) is the main radiation source and the antenna element (monopole element 11) is placed in a position away from human body 5 by the distance D. Here, although a configuration has been adopted with the the mobile wireless terminal 1 in FIG.8 in which the antenna element is formed with a linear monopole element, a flat monopole element may also be used. That is, by extending an area with a flat antenna element, the antenna element can operate at still lower frequencies and the band of the operating frequency can be extended.

Further, if the antenna is a flat element, it is possible to place the antenna in close contact with protruding section 2a on plane B of housing 2, ensures the distance D between human body and antenna element, and extend the area of the antenna, and, as a result, a small broadband antenna can be formed. In addition, although the configuration of mobile wireless terminal 1 of FIG. 8 has shown a configuration where an inverted-L antenna is formed with the antenna element (monopole element 11) and radio substrate 9, a configuration may be adopted where an inverted-F antenna is formed by grounding part of the antenna element (monopole element 11) . In this case, even if distance Ax between the antenna element (monopole element 11) and radio substrate 9 decreases, reactance components of antenna input impedance can be corrected by adjusting the position of a grounding section, and impedance matching of the antenna can be achieved more easily.

The present specification is based on Japanese Patent Application No.2004-174304 filed on June 11, 2004, the entire content of which is expressly incorporated by reference herein.

### Industrial Applicability

As described above, the pocketable mobile wireless terminal according to the present invention adopts a housing structure where the housing plane on the side close to the human body is a flat shape and the opposite plane is a protrusion or a curved shape, so that an antenna element is placed in a position farthest away from the human body when the mobile wireless phone is placed in a pocket and used, and high antenna receiving performance can be constantly achieved. Therefore, according to the present invention, it is possible to realize a pocketable mobile telephone having high antenna sensitivity when carried in a pocket and used.

## Claims

1. A mobile wireless terminal of a pocketable size comprising:
a housing that has a first plane having a flat outer plane and a second plane on which, at least in a part near a center of an outer plane, a protruding section is formed; and
an antenna element placed at the protruding section on the second plane farthest away from the first plane, in parallel with the first plane.

2. The mobile wireless terminal according to claim 1, wherein the antenna element has a dipole shape or a loop shape.

3. The mobile wireless terminal according to claim 1, wherein a plurality of antenna elements form an array configuration.

4. The mobile wireless terminal according to claim 2, wherein a conductive substrate is placed in parallel with the first plane, and the maximum length of the conductive substrate is equal to or greater than half the wavelength of an operating frequency of the antenna element.

5. The mobile wireless terminal according to claim 1, wherein the antenna element is a linear monopole antenna or flat monopole antenna, and is configured as an inverted-L antenna or an inverted-F antenna where the conductive substrate placed in parallel with the first plane and the linear monopole antenna or the flat monopole antenna are placed in parallel with each other.
